# EUROPEAN PATENT APPLICATION

(11) **EP 4 567 467 A1**
(43) Date of publication of application: **11.06.2025**
(21) Application number: 23214726.4
(22) Date of filing: 06.12.2023
(51) Int. Cl.: G01S 13/89, G01S 13/931

(54) **RADAR-BASED OCCUPANCY GRID MAP**

(71) Applicant: Aptiv Technologies AG, 8200 Schaffhausen (CH)
(72) Inventor: Spata, Dominic, 58454 Witten (DE); Kaestner, Florian, 44793 Bochum (DE); Westerhoff, Jens, 44797 Bochum (DE)
(74) Representative: Bardehle Pagenberg Partnerschaft mbB Patentanwälte Rechtsanwälte

(57) **Abstract**

Computerized methods and system for driving assistance in a vehicle are provided. Based on radar point sensor data of the vehicle's environment, a three-dimensional occupancy grid map and a number of feature grid maps with a respective feature dimension corresponding to a feature of the radar point sensor data obtained by a radar system of the vehicle are generated which are then used to generate the refined occupancy grid map. The refined OGM may be provided to an assistance system of the vehicle.

## Description

### FIELD

The present disclosure generally relates to improvements for operating vehicles and, in particular, to methods and systems of generating radar-based occupancy maps.

### BACKGROUND

Assistance and control functions in a vehicle rely on sensor detections of the vehicle-external environment. External sensors may include different types of sensor systems such as cameras, radar and lidar systems. Sensor data obtained by these sensor systems are then processed by onboard computing platforms referred to as electronic control units.

A vehicle control function is navigation. Modern vehicles include driver assistance systems such as front/rear proximity warning and parking assistants. Those functions rely on object detection of the vehicle-external environment.

There is a need for improvements in such control and assistance functions.

### SUMMARY

In this context, methods, systems and computer program products are presented as defined by the independent claims.

More specifically, a computer-implemented method for driving assistance in a vehicle. The method comprises generating, based on radar point sensor data of the vehicle's environment, a three-dimensional occupancy grid map, 3D OGM. Based on the radar point sensor data, a number of feature grid maps, FGMs, are generated, wherein a respective feature dimension of each of the FGMs corresponds to a feature of the radar point sensor data. Based on the 3D OGM and the number of FGMs, a refined OGM are generated. The refined OGM is provided for usage by an assistance system of the vehicle.

In some embodiments, the refined grid map comprises at least one of a refined 3D OGM and a feature map, wherein a dimension of the feature map indicates one or more semantically categorized traffic infrastructure features of the vehicle's environment.

In some embodiments, the number of FGMs comprises one of more of a radar cross section FGM with a dimension indicating a radar cross section of detected stationary environment elements such as traffic infrastructure elements, a radial velocity FGM with a dimension indicating a radial velocity for detected stationary environment elements such as traffic infrastructure elements, and a range FGM with a dimension indicating a distance to detected stationary environment elements such as traffic infrastructure elements.

In some embodiments, generating the refined grid map utilizes a convolutional neural network, CNN, and comprises inputting the 3D OGM and the number of FGMs into the CNN.

In some embodiments, further comprising, by the CNN, applying two-dimensional convolutions to x and y spatial dimensions of the 3G OGM and of the number of FGMs, and treating a z dimension of the 3D OGM and the feature dimension of the number of FGMs as channels.

Some embodiments comprise repeating the results of the two-dimensional convolutions along the z dimension.

In some embodiments, the method further comprises: applying a two-dimensional convolution to the x and y dimension of the 3D OGM for any layer of the z dimension of the 3D OGM separately; and applying a one-dimensional convolution to the z dimension of the 3D OGM for any cell of the x and y dimensions separately.

In some embodiments, the method further comprises: concatenating results of the convolutions; maximum-reducing the z dimension of the concatenated results; successively downsampling the x and y dimensions; and successively upsampling the x and y dimensions.

In some embodiments, further comprising repeating the upsampled results along the z dimension; and concatenating the repeated upsampled results with the concatenated repeated results of the convolutions along the channels.

In some embodiments, the method further comprises reducing a channel dimension to one for outputting the refined 3D OGM.

In some embodiments, the method further comprises reducing the z dimension for outputting the feature map.

In some embodiments, reducing the z dimension to output the feature map comprises determining two cumulative maxima along the z dimension; and concatenating the two maxima and the reduced channel dimension results.

In some embodiments, the method further comprises adaptively re-centering the 3D OGM and the number of FGMs in dependency from a current orientation of the vehicle.

In some embodiments, adaptively re-centering the 3D OGM and the number of FGMs in dependency from a current orientation of the vehicle comprises in response to determining that an offset between the current orientation of the vehicle deviates from a reference point of the 3D OGM and the number of FGMs exceeds a given threshold, re-aligning the 3D OGM and the number of FGMs with the current orientation of the vehicle by an integer translation of the 3D OGM and the number of FGMs.

Another aspect concerns an electronic control unit (ECU) for a vehicle, the ECU being arranged to implement the methods as described herein.

A further aspect concerns a vehicle equipped with a radar sensor system for collecting radar point sensor data to be provided to an ECU, and the ECU being communicatively coupled with the radar sensor system.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
FIG. 1 shows a high-level flow diagram of the present methodologies.
FIG. 2 is a more detailed flow diagram of the present methodologies implemented by way of a convolutional neural network.
FIG. 3 presents further details of an implementation of 3G OGM input and processing.
FIG. 4 provides more detailed insights for an implementation of FGM input and processing.
FIG. 5 elaborates on details of pyramid processing.
FIG. 6 shows details of downsampling to generate a two-dimensional traffic infrastructure map.
FIGS. 7 and 8 demonstrate improvements provided by the present functionalities by way of intersection-over-union and a precision/recall curves.
FIGS. 9A, 9B, 9C and 9D show a visual example of improvements provided by the present functionalities.
FIG. 10 visualizes an example for map orientation utilized in a moving vehicle.
Fig. 11 is diagrammatic representation of a computing system implementing the functionalities described herein.

### DETAILED DESCRIPTION

Deep convolutional neural networks (CNN) are utilized in the area of image analysis and perception, e.g. for object detection and semantic segmentation. The input to neural network is typically a multidimensional tensor representing the image, e.g. a 2D image/grid with multiple channels (e.g. three channels such as RGB) or 3D voxels, defined using a certain spatial coordinate system. Every image grid cell contains either points or some pre-calculated features. In the former case, the network is responsible for automatically learning suitable features.

The architecture of a CNN for image processing to detect features may be based on splitting the 3D dimensional representation into different 2D projections. The splitting may utilize one or more downsampling functions. For example, focal loss is a loss function used in classification tasks, e.g. as part of an object detection pipeline. Corner-pooling is used to realize an anchor-free object detector. Feature pyramids may be used in object detectors and semantic segmentation tasks.

Occupancy Grid Maps (OGMs) and inverse sensor models are used for modeling and understanding the environment, for example in areas of robotics and navigation. OGMs provide a structured way to represent and estimate the occupancy or presence of objects or obstacles in a given geographical area. For example, OGMs may be utilized for tasks like obstacle avoidance, path planning, and simultaneous localization and mapping (SLAM). Robots and autonomous vehicles can use these maps to understand their surroundings, plan safe paths, and avoid collisions with obstacles.

An OGM divides the environment into a grid of equally sized cells. In 2D space, these cells are typically arranged in rows and columns, creating a structured grid that covers the entire area of interest. In a 3D OGM, the cells refer to equally-sized cubic volumes discretizing the mapped area. The size of the cells can vary depending on the particular use-case and the desired level of detail. The size of the cells also forms the resolution of the OGM which affects the accuracy and level of detail in the image representation of the map. A higher resolution grid provides more details, but requires more computational resources to process, maintain and update.

Each grid cell in an OGM is associated with at least a probability that represents the likelihood of occupancy. Typically, this probability is binary, where an individual cell is either considered to be occupied (1 or true) or unoccupied (0 or false). More refined probability values to indicate partial occupancy (values between 0 and 1) may be used as well.

OGMs may be generated by fusing sensor data, such as laser range finders, sonar, or cameras. These sensors provide information about the environment, and the map is updated based on sensor readings. When a sensor measurement indicates the presence of an obstacle within a cell, the occupancy probability for that cell is increased. OGMs may also be integrated with additional features specific to radar.

An OGM may be continually updated as updated sensor data becomes available. Bayesian techniques, such as Bayes' rule or recursive Bayesian filters like the occupancy grid mapping algorithm, may be used to update the probability values in the grid cells based on current sensor measurements and prior data.

A feature grid map (FGM) as referred to hereinafter may be considered to be a variation of an OGM. As explained in detail further below, an FGM is - like an OGM - divided into equally sized cells. Different from a standard OGM, however, an FGM possesses two classical Cartesian dimensions (horizontal, x and y) as well as a third dimension that quantifies the presence of a given feature (in particular a traffic infrastructure element) in the underlying sensor data.

Such mechanisms are utilized herein for the refinement and fusion of multiple occupancy and feature-based grid maps (OGMs) with the goal of producing grid maps with improved quality to facilitate further downstream applications in a vehicle, such as a high-quality three-dimensional (3D) environment map of a vehicle (which is typically moving). Optionally, a 2.5D semantic map of the vehicle environment's static elements may be generated as well.

In implementation examples, these outputs are created by a deep artificial neural network. Spatial 3D map output of the network provides a denser, cleaner and more significant representation of the vehicle environment than the original map data (OGM or multiple OGMs). This improve of map representation quality may be used as the basis for improving downstream tasks in the vehicle like guardrail detection, under-/overdriveable obstacle detection, key-point detection for self-localization, etc. In turn, these improved downstream tasks may facilitate security in the vehicle by being applied in assistance systems and/or for autonomous driving. Thus, the refined grid map output has various practical applications for vehicle operation, security and assistance.

Accordingly, it is provided and described herein a computer-implemented method for driving assistance in a vehicle, the method comprising: generating, based on radar point sensor data of the vehicle's environment, a three-dimensional occupancy grid map, 3D OGM; generating, based on the radar point sensor data, a number of feature grid maps, FGMs, wherein a respective feature dimension of each of the FGMs corresponds to a feature of the radar point sensor data; generating, based on the 3D OGM and the number of FGMs, a refined grid map; and providing the refined grid map for usage by an assistance system of the vehicle.

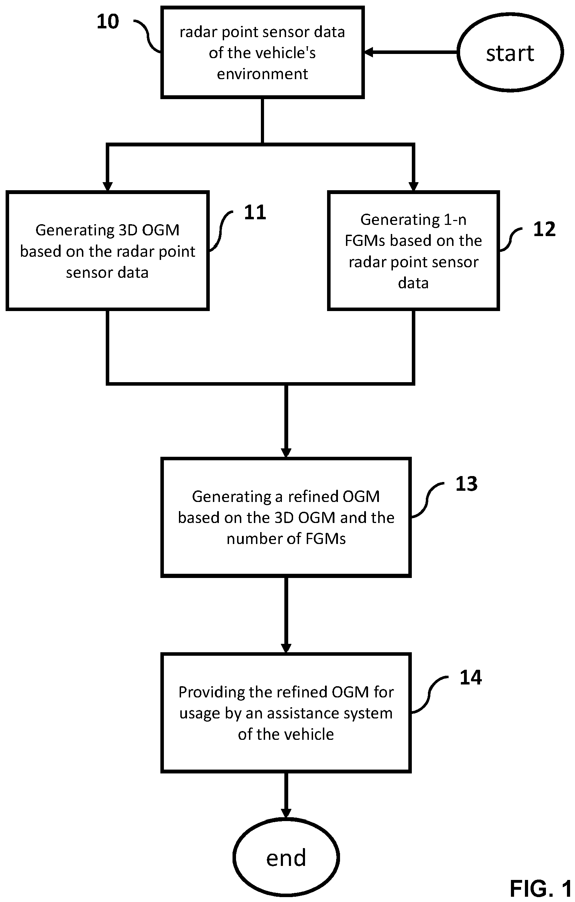

A general visualization of the methodologies described herein is given by FIG. 1. The procedure inputs 10 radar point sensor data of the vehicle's environment. The vehicle may be any type of movable transport vehicle such as cars (including taxis), trucks, busses, trains, ships, airplanes, and the like. The vehicle is equipped with a radar system which collects radar point sensor data. The radar system may be implemented by way of one of multiple radar sensors mounted at the vehicle and are communicatively connected to a computing device (electronic control unit) to provide the sensor data. For example, if the vehicle is a car, four radar sensors may be installed, one at each corner of the car, to allow for a 360° coverage.

Each reflection or echo received by the radar system represents a data point. These data points include information such as the time it took for the radar signal to be reflected by an object and return, as well as the direction (azimuth and elevation) from which the reflection came. These data points are processed to detect and track objects in the field of view of the radar system.

Each detected radar point is characterized by a position in 3D space, e.g. as Cartesian x, y, z coordinates (longitudinal direction x, lateral direction y, altitudinal direction z) or spherical coordinates (range, azimuth angle, elevation angle), as well as additional features such as the radar cross section (RCS) and radial velocity (Doppler effect). Since the present methodologies primarily focus on determining the location of static elements of the geographical environment of the vehicle, point detections with an absolute radial velocity above a certain threshold (indicating moving objects), such as 0.3 m/s, may be discarded from the input.

Radar point sensor data generated by the radar system of the vehicle is used to generate multiple grid maps. More specifically, the radar point sensor data is processed to generate 11 a 3D OGM and generate 12 a number of FGMs. The three dimensions (x, y, z) of the OGM span a Cartesian coordinate system wherein x may refer to the longitudinal direction, y to the lateral direction, z to the altitudinal direction. The 3D OGM may be generated using an inverse sensor model (ISM) which is arranged to render radar point detections into the grid of the OGM according to a Gaussian distribution.

In the ISM, a static uncertainty in radial direction and static uncertainties in the azimuth and elevation angles are assumed. In Cartesian space, the uncertainty in directions orthogonal to the radial direction scales linearly with the radar point detection range from the radar sensor. Using these three uncertainties, a 3D Gaussian distribution is defined with the detection x, y, z position as the mean which determines which elements of the grid each point detection contributes to and how strongly. The total strength of each point's contribution is also scaled using certain confidence measures, for instance a signal-to-noise ratio, indicator values for azimuth and elevation angle finding confidences, and a bistatic flag. This information is used to derive a scaling factor for the Gaussian bell of each radar point.

Furthermore, additional grid maps are generated from other features of the radar point detections. As already mentioned above, these additional grid maps are referred to as feature grid maps (FGMs) herein. The FGMs feature two Cartesian dimensions (horizontal, x and y) as well as a third dimension that corresponds to a feature. Thus, an FGM can be understood as a stack of several two-dimensional OGMs, each of which was calculated only using detections for which the feature is within a certain range. Alternatively, an FGM can be viewed as a 2D OGM in which each spatial cell contains a histogram over the feature. The feature being encoded as the third dimension of the FGM is treated as third coordinate during processing of the neural network. For example, a point detection in an RCS FGM is encoded by coordinates x, y, rcs, while a point detection in a range FGM is encoded by coordinates x, y, range.

The FGMs are generated in a similar way as the 3D OGM. For the FGMs, the 3D Gaussians are scaled down to two dimensions. The feature dimension may follow a nearest neighbor assignment scheme.

In some embodiments, three FGMs are generated over three radar data point features. More specifically, in some embodiments, the number of FGMs comprises one of more of a radar cross section FGM with a dimension indicating a radar cross section of detected stationary environment elements, a radial velocity FGM with a dimension indicating a radial velocity for detected stationary environment elements, and a range FGM with a dimension indicating a distance to detected stationary environment elements. The stationary environment elements may include traffic infrastructure elements which are of interest to be represented in the maps, but also other environment elements such as trees, houses, fences, etc.

For ease of processing, the input 3D OGM and the input FGMs typically use the same grid structure and grid size, i.e. they have the same resolution. Further details of exemplary FGMs utilized herein are discussed below.

With continued reference to **FIG. 1****,** the 3D OGM and the number of FGMs are used to generate 13 a refined grid map. The term refined grid map may include one or more map representations. In some embodiments, the refined grid map comprises at least one of a refined 3D OGM and a traffic infrastructure feature map. The traffic infrastructure feature map is a two-dimensional map with two spatial dimensions (longitudinal, lateral) and a third dimension of the feature map indicates one or more traffic infrastructure features (e.g. guardrails, bridges, signs) of the vehicle's environment.

Thus, for example, the refined grid map may again be a 3D OGM with an improved quality, i.e. indicating the occupancy in the grids more correctly. The refined OGM may also comprise a map representation indicating features particularly relevant for vehicle navigation and/or assistance, such as traffic infrastructure elements that are underdrivable (e.g. a tunnel, a tree, a bridge spanning over the road, a gate, a highway sign), or overdrivable (e.g. solid objects above road-level that are low enough that they can be driven over with enough care, such as speed bumps, curbs, etc.). For example, a crossing bright with a height of 3 meters may be indicated as an underdrivable traffic infrastructure element for passenger cars, but not for trucks or busses.

Generally, the terms "underdrivable" and "overdrivable" are used herein to indicate drivability conditions of a road or path. These terms are related to the vehicle's ability to drive through the traffic infrastructure or road safely, namely to safely drive under a traffic infrastructure element limiting the drive-through height of the traffic infrastructure element, and to safely drive over a traffic infrastructure element.

Finally, the refined grid map is provided 14 to a functionality of the vehicle, for usage by an assistance system of the vehicle. The refined OGM may be used for any assistance, security, safety or control function of the vehicle. For example, a level 2 assistance system of the vehicle may warn the driver in case of a not-underdrivable traffic infrastructure element in the pathway of the vehicle based on the refined OGM. An autonomously driven vehicle may stop before a not-underdrivable traffic infrastructure element or navigate to circumvent such not-underdrivable traffic infrastructure element. The improved quality of the refined output grid map may help to improve the quality of such level 2 assistance systems. For example, false-positives for a break assistance system (which activate a break operation without actual cause) may be reduced.

The refined OGM may be used to display traffic infrastructure information to a driver of the vehicle via a graphical user interface of the vehicle to better assist the driver in driving and navigation tasks. For example, underdrivable or overdrivable traffic infrastructure elements may be graphically highlighted in shown 2D or 3D map representations, whereas traffic infrastructure elements which may not be clearly underdrivable or overdrivable for the given vehicle may be graphically marked differently to highlight any potential obstacles or dangers for the vehicle.

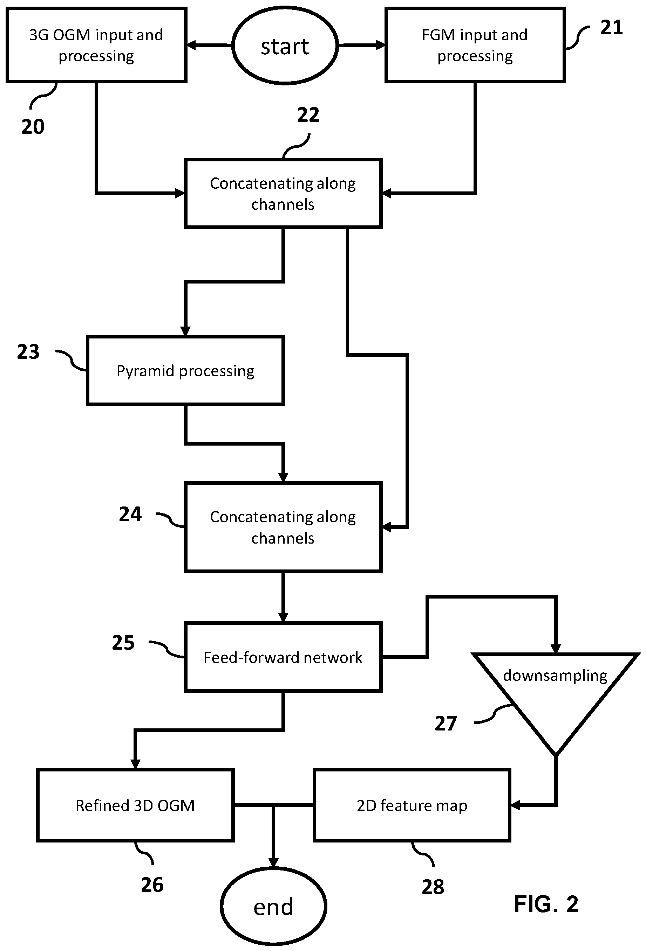

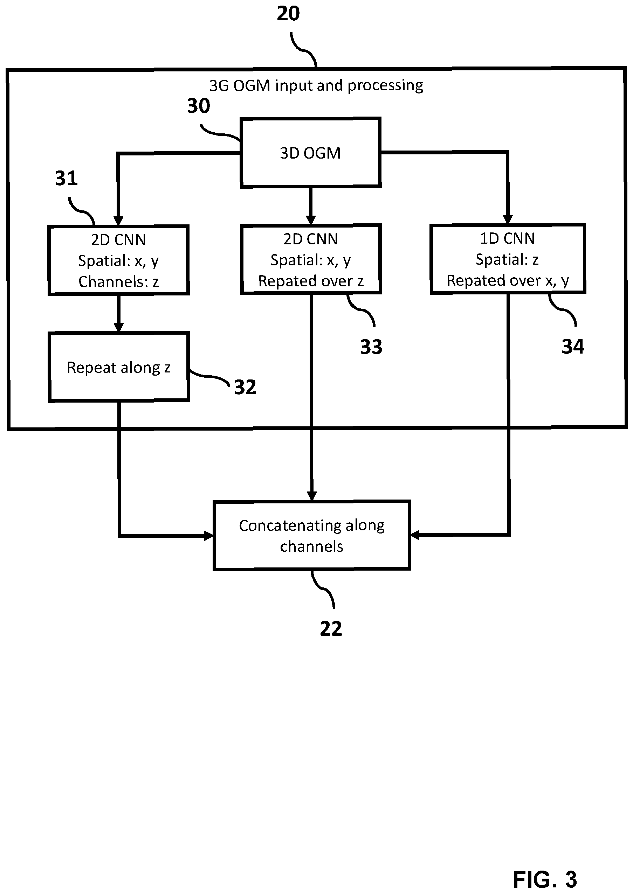

In some embodiments, generating the refined grid map utilizes a convolutional neural network, CNN, and comprises inputting the 3D OGM and the number of FGMs into the CNN. **FIGS. 2 to 6** show details of this implementation option using a CNN. **FIG. 2** present a more general overview, while **FIGS. 3 to 6** add some additional options details.

The implementation example of **FIG. 2** utilizes a convolutional neural network (CNN). Other implementation options such as alternative machine-learning models or neural network types are possible as well. Both, the 3D OGM and the number of FGMs are input to the neural network and are initially processed by the CNN (activities 20, 21). As mentioned above, one input is a 3D Cartesian OGM with the dimensions x, y, and z. The OGM is a 3D map of the static environment of the vehicle as perceived by the radar sensor, and as such is prone to noise and inaccuracies, for Radar systems especially in the z-dimension (vertical).

Generally, processing 20, 21 includes a convolution of the input maps. For example, two dimensions of the input maps are convoluted, while the third dimension is treated as the image channels. The output of the processing 20, 21 is aggregated by concatenating 22 the output along the image channels.

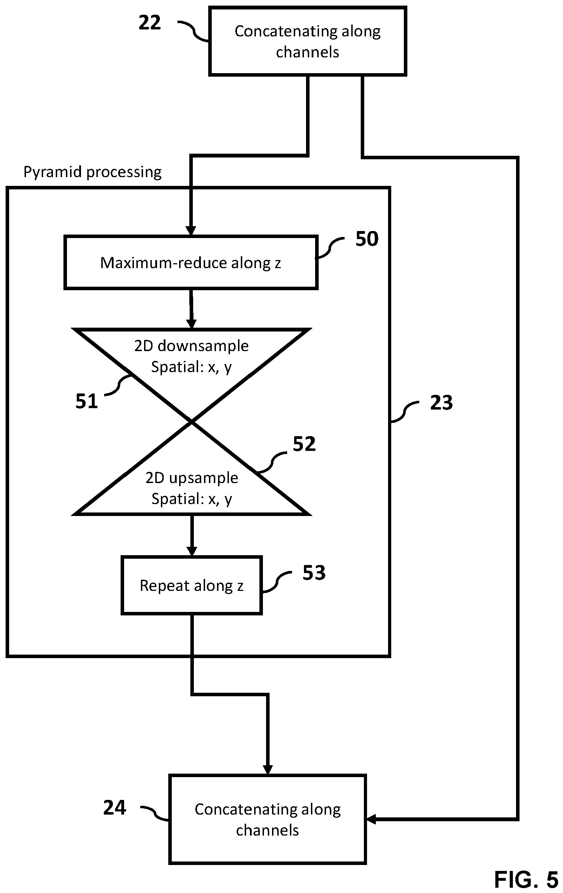

The output of the concatenation 22 is further processed by a pyramid processing 23, using multiple layers with different spatial resolutions or receptive fields within the CNN. This mechanism helps to capture features present in the input maps at different scales and facilitates determining the structure of objects in the radar input OGM/FGMs, regardless of size or location of the objects. Details of the pyramid processing 23 are further explained below with reference to **FIG. 5****.**

The output of the pyramid processing 23 and the output of the concatenation 22 are then again concatenated 24 along the image channels. The output of this second concatenation 24 is input to a feed-forward network 25 (FFN). The FFN 25 reduces the channel dimension of the map data gradually to one for each x-y-z-voxel separately, resulting in the refined 3D OGM 26. Via a further downsampling activity 27, a 2D traffic infrastructure feature map 28 may be output as well.

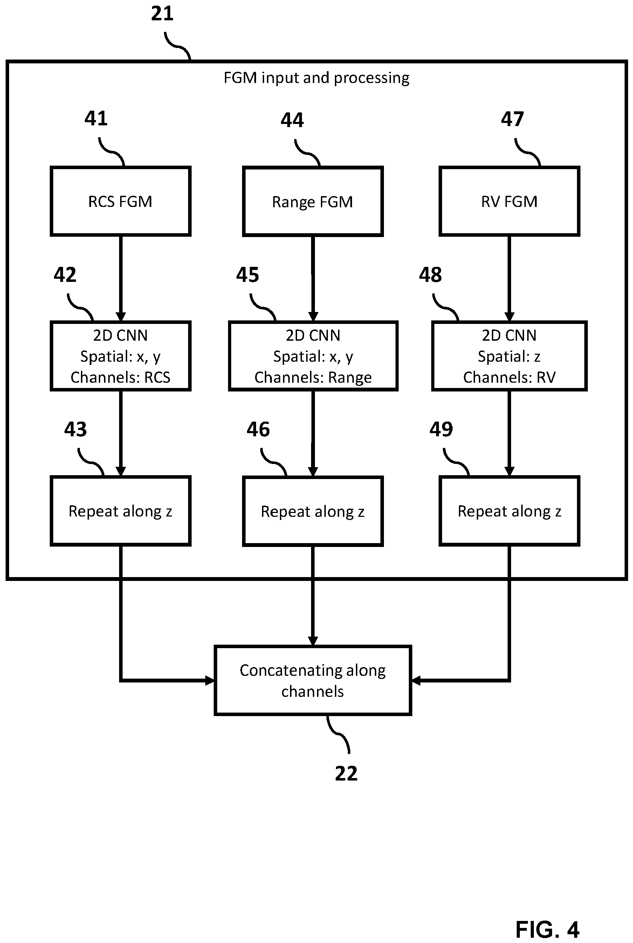

**FIGS. 3** **and** **4** provide a more detailed view of exemplary processing of the input 3G OGM and the number of FGMs. Both, **FIG. 3** and **FIG. 4** together, constitute multiple input and processing paths and stages of the CNN to efficiently aggregate information across different dimensions and input grids. At a first stage of convolution processing, formed by boxes 31, 33, 34, 42, 45, 48, all input grid maps are processed using convolutions applied to their spatial dimensions. Hence, the input grid maps are first subject to a convolution.

Some embodiments further apply by the CNN, two-dimensional convolutions to x and y spatial dimensions of the 3G OGM and of the number of FGMs; and treating a z dimension of the 3D OGM and the feature dimension of the number of FGMs as channels. Some embodiments comprise repeating the results of the two-dimensional convolutions along the z dimension. Some embodiments further apply a two-dimensional convolution to the x and y dimension of the 3D OGM for any layer of the z dimension of the 3D OGM separately; and applying a one-dimensional convolution to the z dimension of the 3D OGM for any cell of the x and y dimensions separately.

More specifically, the 3D OGM 30 is processed by three paths (**FIG. 3**). The first path 31, 32 is given by a 2D convolution over the spatial x, y dimensions, treating the z dimension (depth, vertical dimension of the 3D OGM) as image channels. Typically, the convolution 31 (as well as other convolutions performed by the CNN) utilizes set of filters (also referred to as kernels) to perform a convolution operation on the input data. Applicable sizes of the filters, such as 3x3 or 5x5, depend on the implementation case. The convolution involves element-wise multiplication of the filter with a portion of the input data in the z dimension and then summing the results to produce a single output value. This convolution operation is performed over the spatial dimensions (the longitudinal direction x and lateral direction y) of the input OGM. The result of the convolution is repeated 32 to re-gain the z dimension, i.e. the 2D convoluted x, y layer is stacked along the z dimension (Z-many copies) to form the output map for that processing path.

The same convolution processing is employed for the input FGMs (**FIG. 4**). The RCS FGM 41 is convoluted 42 over the spatial dimensions, the Range FGM 44 is convoluted 45 over the spatial dimensions (longitudinal direction x, lateral direction y) (longitudinal direction x, lateral direction y) and the RV FGM 47 is convoluted 48 over the spatial dimensions (longitudinal direction x, lateral direction y) (longitudinal direction x, width y), whereas the respective feature dimension is treated as image channels. All three convolutions 42, 45, 48 are repeated 43, 36, 49 along the z dimension.

Referring again back to the 3D OGM **(****FIG. 3****),** the 3D input OGM is processed by two additional processing paths. On the one hand, 2D convolution 33 is performed in the x-y-plane to all z-layers separately (repeated over z), so the z dimension is retained naturally. On the other hand, a 1D convolution along the z-dimension is applied to all x-y-cells separately (repeated over x, y), so that x and y dimension are retained.

The resulting convoluted map data is concatenated 22 with the output of the convolution stage of the FGMs **(****FIG. 4****)** along the channels (cf. **FIG. 2**) to form a combined intermediate representation of the input map data.

Some embodiments concatenate the (repeated) results of the convolutions (repeated convolution 31, convolution 33, convolution 34, repeated convolutions 42, 45, 48), maximum-reduce the z dimension of the concatenated results, successively downsample the x and y dimensions, and successively upsample the x and y dimensions. Some embodiments further repeat the upsampled results along the z dimension; and concatenate the repeated upsampled results with the concatenated repeated results of the convolutions along the channels.

With reference to **FIG. 5****,** the output of the concatenation 22 is processed by pyramid processing 23. Here, the z dimension of the intermediate representation is reduced. For example, a maximum-reduce operation 50 is applied the z-dimension which reduces the z dimension to the maximum value over the z dimension. Thus, for each spatial location (i.e., each x, y position), the maximum value in the z dimension (among all the channels) at that position is selected.

Furthermore, the map data is first successively downsampled 51 and then successively upsampled 52 back to the original size. Downsampling 51 may be realized again by a number of convolutional layers followed by pooling layers (e.g., max-pooling or strides in convolution) to progressively reduce the spatial dimensions of the maps while increasing the number of channels. This allows to capture high-level and abstract features in the map data.

Upsampling 52 takes the lower-resolution maps from the downsampling 51 and upsamples the maps to match the spatial dimensions of the higher-resolution feature maps. This may be realized by using techniques like transposed convolution operations, nearest neighbor, bilinear interpolation and/or maximum unpooling.

Feature pyramid processing may also include further processing steps such as combining maps from both the downsampling and upsampling. At each level of the pyramid, the map data may represent information at a specific spatial resolution. Thus, combined maps may be created by fusing the high-level, abstract features from the downsampling with the finer-grained details from the upsampling.

The output of the pyramid processing, i.e. a number of maps at different spatial resolution, is repeated 53 in the z-dimension and then concatenated 24 with the existing map data output by concatenation 22 to form a further intermediate representation of the map data.

Some embodiments further reduce a channel dimension to one for outputting the refined 3D OGM. Some embodiments further reduce the z dimension for outputting the traffic infrastructure feature map. In some embodiments, reducing the z dimension to output the feature map comprises determining two cumulative maxima along the z dimension; and concatenating the two maxima and the reduced channel dimension results.

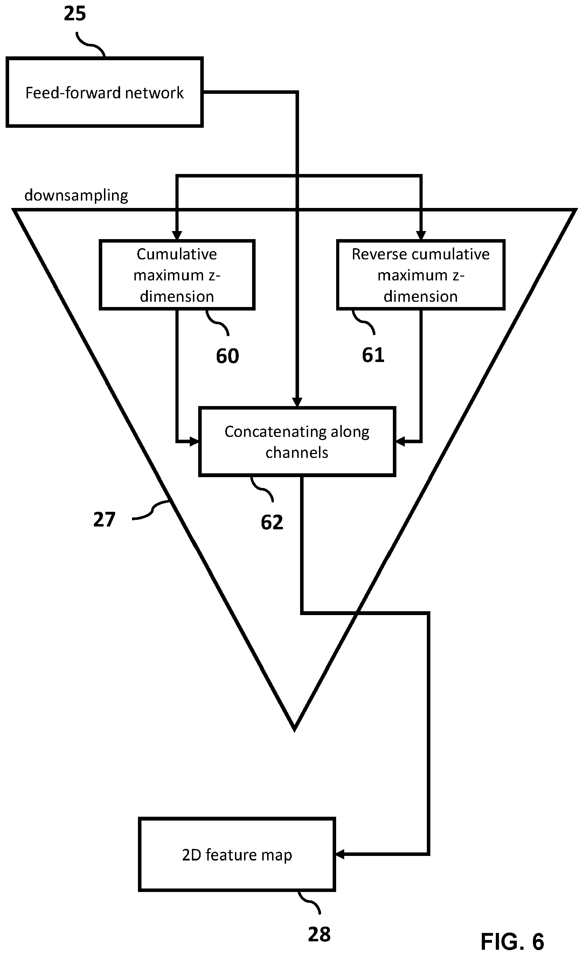

**FIG. 6** relates to such further details of the downsampling 27 to generate a 2D traffic infrastructure feature map 28. The 2D traffic infrastructure feature map is produced by taking the intermediate map representation of the feed forward network 25 and by applying a 1D convolutional downsampling network to reduce the z dimension. Optionally, an edge pooling operation is performed at each resolution stage of the downsampling 27 to facilitate detection of object boundaries along the z dimension. Edge pooling computes two cumulative maxima along the z dimension, one per direction, namely a cumulative maximum 60 of the z dimension and a reverse cumulative maximum 61 of the z dimension. To this end, the z dimension is scanned from bottom to top (60) and from top to bottom (61) to cumulatively determine the maximum values. These two results and the original input are then concatenated 62 (max-pooled) along the channel dimension.

The CNN may be trained by using ground truth data, e.g. in form of Lidar-based OGMs. OGMs computed from lidar point clouds may serve as the ground truth targets for the network-based refinement of the radar-based OGMs. Each of the points in the cloud have previously been assigned a semantic class label of either "road", "obstacle", or "overdrivable" (e.g. curbstones, speed bumps) by a preexisting semantic classification algorithm. This allows the computation of a 4D semantic OGM with three spatial dimensions and a fourth dimension corresponding to the semantic class. This OGM could also be interpreted as three separate 3D OGMs computed using points separated by class.

From this 4D lidar-based semantic OGM, the following data may be computed for CNN training purposes:
3D labels: A 3D OGM with the road removed (the radar system of the vehicle is typically unable to recognize roads or comparable driving corridors due to the lack of objects). Hence, the 3D OGM serving as a reference for the 3D OGM CNN output features "obstacle" and "overdrivable" parts of the vehicle environment.
2.5D semantic labels: A 2D map with three (nonexclusive) exemplary classes corresponding to "low obstacle", "high obstacle", and "overdrivable". "Low obstacles" are defined as any obstacles e.g. at or below 2.5 meters above the road surface and "high obstacles" as any obstacles over 2.5 meters above the road surface, such that parts of the map shown as "high obstacle" but not "low obstacle" can be safely driven under by a passenger car (e.g. bridges, tunnels, highway signs). For other vehicle types (trucks, busses, ships, etc.), the classes "low obstacle" and "high obstacle" may be defined adequately depending on the vehicle height.
A visibility mask: A 3D binary mask that indicates elements of the vehicle environment that are visible to the radar sensor, computed using raytracing.

The CNN may be trained by using a variation of the focal loss operation which addresses the issue of class imbalance in object detection tasks, where the number of background (non-object) elements significantly outweighs the number of object samples. This imbalance can lead to suboptimal learning and model performance. In traditional variants of focal loss, focal weights are computed for each element of the grid in isolation, wherein non-well-classified elements are weighted higher than well-classified elements. As these weights do not consider the neighborhood of an element, focal loss tends to focus on individual problematic elements, rather than on problematic regions. At the boundaries of objects, this may lead to oscillation during training and blurry edges during inference. To mitigate these issues, it is proposed herein to apply max-pooling to the focal weights. An element with a high focal weight thus causes a small neighborhood around the element to be emphasized in the loss, rather than just that element. This may improve the visual quality of the resulting maps.

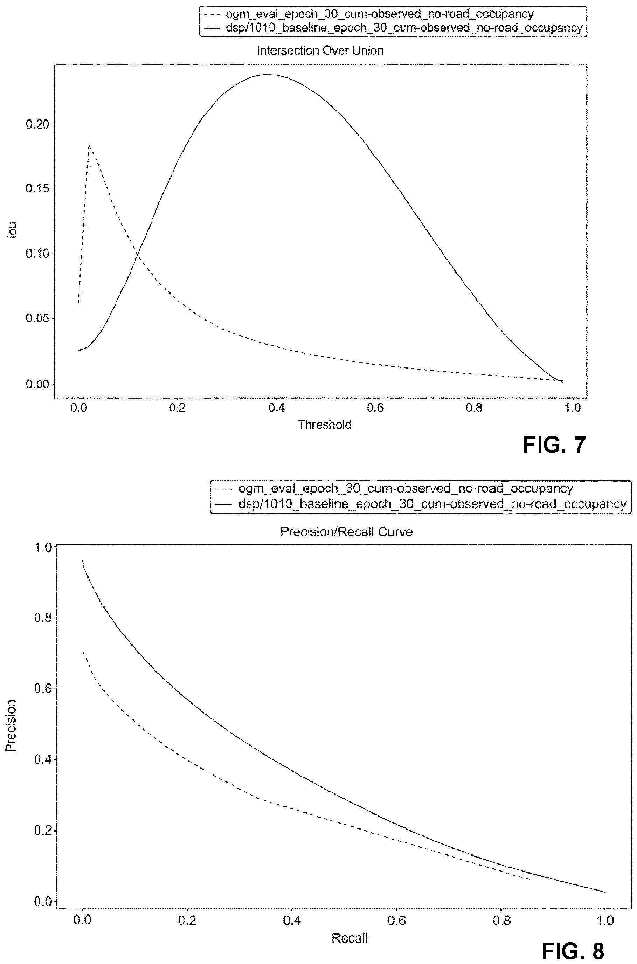

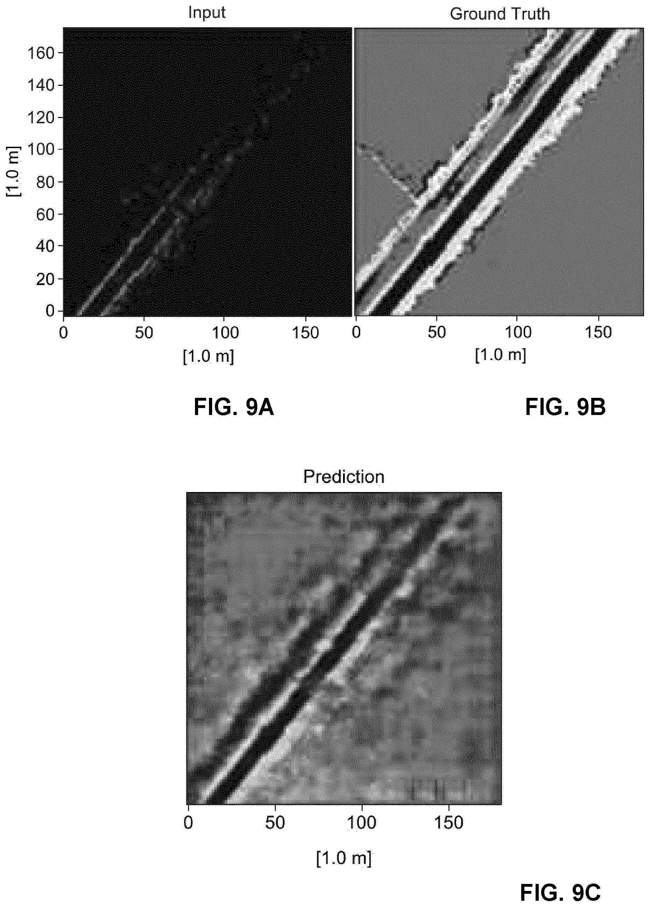

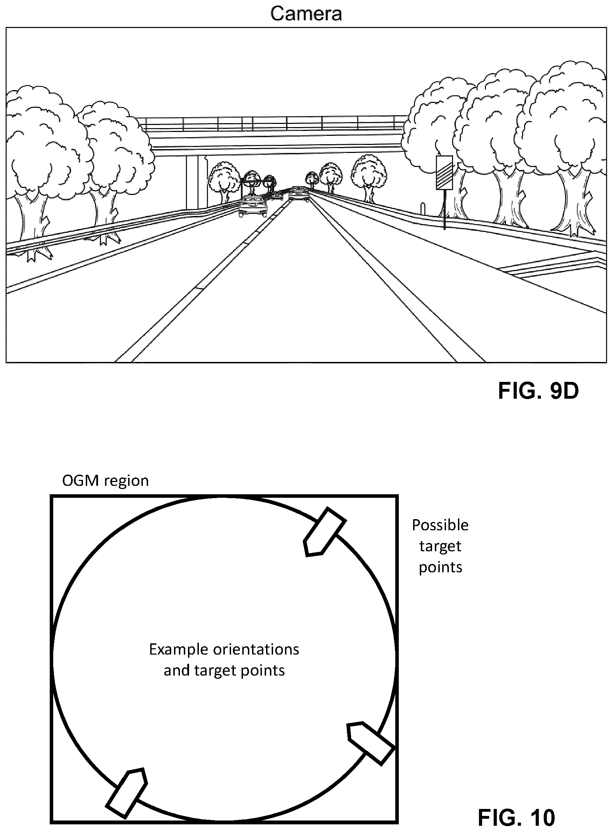

Exemplary degrees of output map quality can be derived from the graphs of **FIGS. 7 and 8** as well as from the map and image examples of **FIGS. 9A, 9B, 9C** **and** **9D****.**

**FIG. 7** is an intersection-over-union (IoU) chart, while **FIG. 8** is a precision/recall curve. In both diagrams, the solid line represents performance of the present methodologies introduced herein, wherein the dotted line represents the input 3D OGM. **FIG. 7** shows significantly higher IoU values (as a function of IoU threshold for object classification, i.e. predicted voxels are within the given distance threshold to the ground truth voxels) for the CNN-based refined grid map than for the input 3D OGM 30. With a classification threshold of about 0.4, the correspondence of the refined output grid map with the ground truth data is at an optimum working point. **FIG. 8** shows the tradeoff between precision and recall. As usual, precision is defined as the ratio between true positives and all positives (true and false), while recall is defined as the ratio between true positives and the sum of true positives and false negatives. As can be derived from the chart of **FIG. 8****,** the performance of the refinement mechanisms described herein outscore the input OGM.

**FIGS. 9A, 9B, 9C** **and** **9D** provide a visual example of the improvements of the mechanisms described herein. **FIG. 9A** shows an example input OGM 30 in a 2D bird-eye representation, while **FIG. 9B** depicts a corresponding Lidar-based ground truth image. **FIG. 9C** is an example of a corresponding refined grid map as output according to the present methodologies, while **FIG. 9D** complimentarily provides the ego-vehicle perspective. It can be seen that the picture of **FIG. 9C** is a significant improvement of the raw input map of **FIG. 9A** as traffic infrastructure features have become much more visible.

Some embodiments further adaptively re-center the 3D OGM and the number of FGMs in dependency from a current orientation of the vehicle. In some embodiments, adaptively re-centering the 3D OGM and the number of FGMs in dependency from a current orientation of the vehicle comprises in response to determining that an offset between the current orientation of the vehicle deviates from a reference point of the 3D OGM and the number of FGMs exceeds a given threshold, re-aligning the 3D OGM and the number of FGMs with the current orientation of the vehicle by an integer translation of the 3D OGM and the number of FGMs.

An exemplary visualization of such adaptive re-centering scheme is given by **FIG. 10****.** The refined grid map is intended to cover a certain area in front of the ego-vehicle in order to provide information in the driving direction. But as the ego-vehicle moves, its position and orientation relative to the grid map changes. Eventually, this would cause the vehicle to leave the grid map region or to turn towards one of the edges of the mapped region, such that the grid map no longer actually covers a sufficient part of the region in front of the vehicle.

Compensating such changes in vehicle orientation via repeated interpolation onto a vehicle-centric grid is ill-advised, as interpolation artefacts will may quickly accumulate. Instead, it is proposed to employ an adaptive re-centering scheme for square grids that can keep the refined grid map aligned with the region in front of the ego-vehicle using only occasional lossless integer translations. The re-centering scheme aims to keep the ego-vehicle near a certain target point. This target point lies on a ring around the edge of the grid and changes dynamically based on the current vehicle orientation. As the ego-vehicle turns, the target point slides along the indicated outer ring. If the ego-vehicle is determined to be offset from the target point exceeding a given offset threshold, the input grid map (3D OGM) and the number of FGMs undergo an integer translation to bring the ego-vehicle and target point as close as possible. Sharp turns of the ego-vehicle thus cause larger and/or more frequent shifts to keep the vehicle approximately oriented towards the center of the grid, while slighter turns of the ego-vehicle cause less frequent shifts and very slight turns below the offset threshold may not cause any shifts.

The adaptive re-centering may be implemented at the level of the network input data, i.e. by shifting the 3D OGM and the number of FGMs when the offset from the target point exceeds the given threshold. More specifically, shifts to re-center occur between updates of the input 3D OGM based on the current and past versions of the grid map data originating from previous radar point sensor data. In that way, the refined grid map output by the network is dynamically adapted indirectly, by adapting the network input map data to the current orientation of the ego-vehicle in the manner described above.

In effect, the refined grid map remains aligned within a given offset threshold with the current orientation of the ego-vehicle such that the ego-vehicle drives towards the center of the grid. This ensures in a computational-efficient manner that a large proportion of the outputted refined grid map grid lies in front of the ego-vehicle at all times, even though the orientation of grid in the coordinate system does not change.

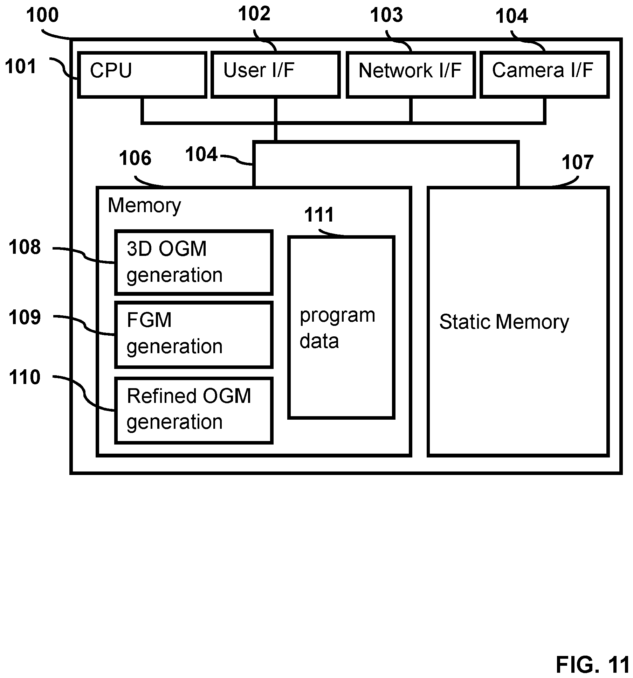

**FIG. 11** is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a network interface 103 to communicate with an onboard sensor system of the vehicle as well as other computing systems such as electronic control units. The sensor system is used for obtain sensor data to be provided to the computing system 100 for processing.

The computing system 100 may comprise a graphical processing unit 104 (GPU) which may be particularly arranged to performed at least certain parts of the CNN operations described above. For example, GPU 104 may feature a single-instruction multiple threads (SIMT) architecture specifically adapted to execute machine-learning mechanisms such as the CNN-related operations described above. Utilizing GPU 104 for such operations may allow a real time implementation which generates and/or updates the refined grid map on a regular basis, e.g. on a 50 millisecond or 100 millisecond time interval (depending on the frequency of incoming radar point sensor data and updated input maps).

The main memory 106 may be a random-access memory (RAM) and/or any further volatile memory. The main memory 106 may store program code for a module 108 to generate an input 3D OGM based on sensor data, a module 109 to generate a number of input FGMs based on sensor data, and a module 110 to generate the refined grid map (refined 3D OGM and/or 2DM traffic infrastructure feature map) based on the input 3G OGM and the number of input FGMs. Other modules needed for further functionalities described herein may be stored in the memory 106. The memory 106 may also store additional program data 111 for providing the functionalities described herein. Parts of the program data 111 and the modules 108, 109, 11 may also be stored in a separate, e.g., cloud memory and executed at least in part remotely.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method for driving assistance in a vehicle, the method comprising:
- generating, based on radar point sensor data of the vehicle's environment, a three-dimensional occupancy grid map, 3D OGM;
- generating, based on the radar point sensor data, a number of feature grid maps, FGMs, wherein a respective feature dimension of each of the FGMs corresponds to a feature of the radar point sensor data;
- generating, based on the 3D OGM and the number of FGMs, a refined OGM; and
- providing the refined OGM for usage by an assistance system of the vehicle.

2. The method of claim 1, wherein the refined OGM comprises at least one of a refined 3D OGM and a feature map, wherein a dimension of the feature map indicates one or more traffic infrastructure elements of the vehicle's environment.

3. The method of claim 1 or claim 2, wherein the number of FGMs comprises one of more of
- a radar cross section FGM with a dimension indicating a radar cross section of detected stationary environment elements;
- a radial velocity FGM with a dimension indicating a radial velocity for detected stationary environment elements; and
- a range FGM with a dimension indicating a distance to detected stationary environment elements.

4. The method of any one of claims 1 to 3, wherein generating the refined OGM utilizes a convolutional neural network, CNN, and comprises
- inputting the 3D OGM and the number of FGMs into the CNN.

5. The method of claim 4, further comprising, by the CNN,
- applying two-dimensional convolutions to x and y spatial dimensions of the 3G OGM and of the number of FGMs; and
- treating a z dimension of the 3D OGM and the feature dimension of the number of FGMs as channels.

6. The method of claim 5, further comprising repeating the results of the two-dimensional convolutions along the z dimension.

7. The method of claim 5 or claim 6, further comprising:
- applying a two-dimensional convolution to the x and y dimension of the 3D OGM for any layer of the z dimension of the 3D OGM separately; and
- applying a one-dimensional convolution to the z dimension of the 3D OGM for any cell of the x and y dimensions separately.

8. The method of claim 7, further comprising:
- concatenating results of the convolutions;
- maximum-reducing the z dimension of the concatenated results;
- successively downsampling the x and y dimensions; and
- successively upsampling the x and y dimensions.

9. The method of claim 8, further comprising
- repeating the upsampled results along the z dimension; and
- concatenating the repeated upsampled results with the concatenated repeated results of the convolutions along the channels.

10. The method of claim 9, further comprising
- reducing a channel dimension to one for outputting the refined 3D OGM.

11. The method of claim 10, further comprising
- reducing the z dimension for outputting the feature map.

12. The method of claim 11, wherein reducing the z dimension to output the feature map comprises
- determining two cumulative maxima along the z dimension; and
- concatenating the two maxima and the reduced channel dimension results.

13. The method of any one of claims 1 to 12, further comprising:
- adaptively re-centering the 3D OGM and the number of FGMs in dependency from a current orientation of the vehicle.

14. The method of claim 13, wherein adaptively re-centering the 3D OGM and the number of FGMs in dependency from a current orientation of the vehicle comprises
- in response to determining that an offset between the current orientation of the vehicle deviates from a reference point of the 3D OGM and the number of FGMs exceeds a given threshold, re-aligning the 3D OGM and the number of FGMs with the current orientation of the vehicle by an integer translation of the 3D OGM and the number of FGMs.

15. An electronic control unit being arranged to implement the method of any one of the preceding claims.

16. A vehicle, comprising:
- a radar system for collecting radar point sensor data; and
- the electronic control unit communicatively coupled to the radar system, electronic control unit being arranged to implement the method of any one of claims 1 to 14.

17. A computer program product comprising instructions, which, when executed on a computer, cause the computer to perform the method any one of claims 1 to 14.
